# EUROPEAN PATENT SPECIFICATION

(11) **EP 0 495 656 B1**
(45) Date of publication and mention of the grant of the patent: **06.09.1995**
(21) Application number: 92300370.1
(22) Date of filing: 16.01.1992
(51) Int. Cl.: B60G 17/056, F16B 35/00

(54) **Retention device**
Festhaltevorrichtung
Dispositif de rétention

(30) Priority: 18.01.1991 GB 9101142
(43) Date of publication of application: 22.07.1992
(73) Proprietor: LUCAS INDUSTRIES PUBLIC LIMITED COMPANY, Solihull, West Midlands B91 3TX (GB)
(72) Inventor: Thomas, Paul Antony, Newport, Gwent NP9 7JD, Wales (GB)
(74) Representative: Waite, Anthony William

(56) References cited:
- EP-A- 0 237 621
- DE-A- 3 347 435
- FR-A- 2 574 877

## Description

This invention relates to an assembly comprising a pair of coacting components, such as a spring-loaded force transmission link and a load-conscious valve actuated, in use, by the link, and a retention device for retaining the components in a predetermined relationship.

Devices such as load-conscious valves are often pre-set during manufacture and require to be retained in the pre-set state during storage and possible transport to a vehicle assembly location for assembly on to a vehicle. Existing measures for such retention include transit straps and similar devices applied to hold components in position, but these have not been found entirely satisfactory since they normally require to be removed prior to installation of the device, with a risk of disturbing the setting of the device unless additional careful precautions are taken.

An object of the present invention is to provide an assembly incorporating a retention device which securely preserves the relative setting of components retained by the device, during storage and transport of the assembled components and until the components have been installed in their final positions of use.

According to the invention, the retention device comprises a body having attachment means cooperating with attachment means on the second component so as to attach the device firmly to the second component, and engagement means, releasably engaged with the adjuster element so as to retain the latter relative to the first component whilst permitting rotary adjustment of the element.

In one practical form of the device, the attachment means of the body is a projection or socket adapted to interengage closely a complementary projection or socket respectively of the second component.

The body preferably forms a slot, conveniently extending in general alignment with the projection or socket, part of the slot is large enough for the rotatable adjuster element, which is conveniently a nut, to pass therethrough in a first direction which is conveniently generally perpendicular to said projection or socket, and part of the slot is of restricted width and has edge portions forming the engagement means so as to be brought within a lateral groove of the adjuster element when the device is moved longitudinally to bring the projection and socket into interengagement following passage of the adjuster element through the slot.

The invention will now be described, by way of example, with reference to the accompanying drawings in which:-
Figure 1 is an end elevation of a valve fitted with the retention device of the invention;
Figure 2 is a side elevation of the valve of Figure 1 illustrating means for connecting it to structure, such as a vehicle body;
Figure 3 is a perspective view of the retention device separate from the valve of Figures 1 and 2, and
Figures 4 and 5 are respectively perspective views of opposite sides of an alternative form of the retention device of the invention.

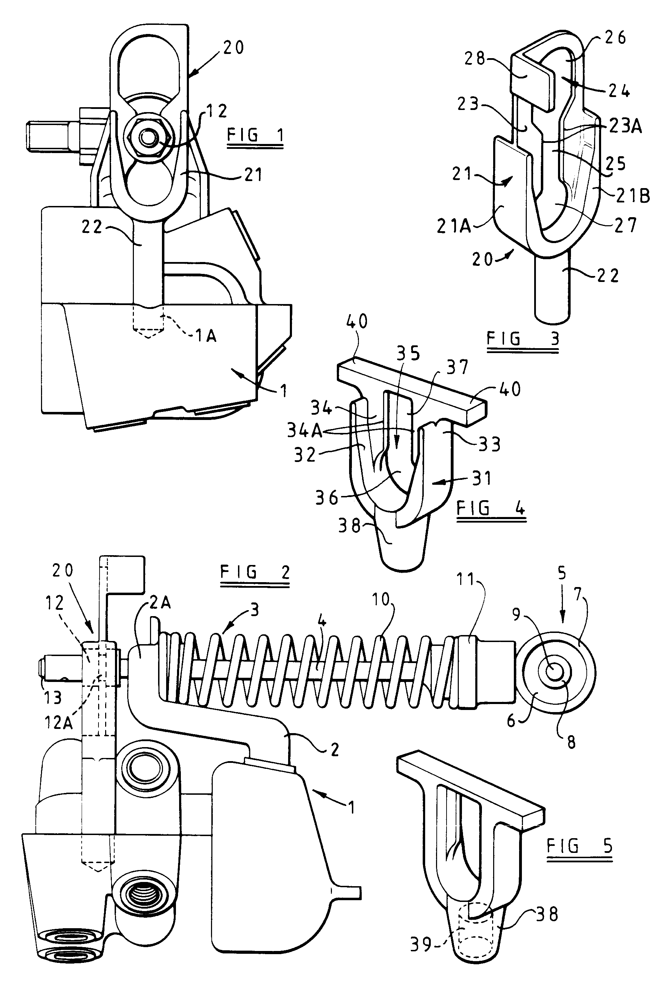

The valve illustrated in Figures 1 and 2 is a load conscious valve, having a body 1, from which extends an operating lever 2. The valve would normally be rigidly secured, in use, to a vehicle chassis and the operating lever 2 connected by way of a link assembly 3 to a suspension arm of the vehicle with the link assembly 3 extending generally vertically. The link assembly includes a rigid link 4 secured at one end to the lever 2 and at its other end to a bush assembly 5 which includes a resilient bush 6, as of rubber for example, sandwiched between an outer metal cylindrical casing 7 and an inner eye member 8. The link 4 is connected to the casing 7 and the eye member 8 to the suspension arm via a connecting stud 9. A valve spring 10 encircles the link 4 and bears at one end against an abutment member 11 engaged against the casing 7 and at its other end against an end portion 2A of the lever 2 which is directed generally perpendicularly to the longitudinal direction of the link. The end portion 13 of the link remote from the bush assembly 5 is threaded and receives an adjusting nut 12 thereon, the nut having a peripheral groove 12A for the purpose to be described.

A retention device 20 can be seen in place between the two co-acting components represented by the link 4 and the valve body 1 and, as can be seen more clearly in Figure 3, comprises a generally U-shaped body 21 having a pair of arms 21A, 21B and from the base of which extends a spigot 22. Between the arms 21A, 21B of the U extends a web 23 having a through opening 24 consisting of a slot 25 which is enlarged at each end thereof to form respective wider portions 26, 27. The web 23 is also provided with a perpendicularly extending tongue 28, of which the function will become apparent hereinafter. The dimensions of the slot portions 24 to 27 are such that the nut 12 on the threaded part 13 of the rod 4 can pass freely through the slot portion 27, the width of the slot portion 25 being such that, as the device is moved downwardly to engage the spigot 22 in an opening 1A of the body, the edge portions 23A of the web 23 adjacent the narrow slot portion 25 serve as engagement means and move into the peripheral groove 12A of the nut, thereby anchoring the nut axially relative to the valve body.

During manufacture of the valve assembly, which includes assembling the rod 4, spring 10 and boss 11 in their illustrated positions relative to the arm portion 2A and bush assembly 5, the components are placed in an assembly jig or the like. The retention device 20 is passed over the nut and the spigot 22 located firmly in the opening 1A, in the manner described. A suitable detector means, such as a light beam, detects the presence and correct positioning of the device by impinging on the tongue 28, following which it is possible to increase the load on the spring 10 by rotating the nut manually or automatically in the appropriate direction along the threaded end portion 13 of the rod 4, with the spring load reacted via the nut on to the retention device and thence on to the body, until the desired pre-load is achieved in the spring, as measured by appropriate conventional means. At this point, the nut is crimped firmly onto the rod to prevent any further rotation thereof. With the rod 4 thus firmly retained in both axial directions, the assembly, including the spacer, may then conveniently be stored and transported to an eventual installation location for assembly onto a vehicle. Whilst the retention device remains in place, the setting of the spring remains undisturbed and represents the "no load" original equipment condition of the vehicle i.e. its condition on an assembly line without petrol and other essential loadings applied to the vehicle before use.

It will be seen that the web 23 is offset longitudinally of the rod 4 relative to the U-shaped body i.e. widthwise of the body so as to be asymmetrically disposed in this direction. This means that by removing the device 20 from the valve and replacing it after rotating it through 180° about its longitudinal axis, the nut 12 may be held in an alternative position for valve re-setting should replacement be required during service when it may be necessary to take into account the heavier service weight of the vehicle.

An alternative form of retention device is illustrated in Figures 4 and 5. The device will be seen to be similar to that of Figure 3 in that it has a generally U-shaped body 31, of which the arms 32, 33 are interconnected by a web 34. The web has a through opening 35 which, in this embodiment, has a wider, generally circular lower portion 36 which opens into an upwardly extending slot 37. The dimensions of the portions 36, 37 are such that the nut 12 of the valve can pass freely through the portion 36 and the rod 4 can pass through the slot 37 with the edges 34A of the web 34 adjacent the peripheral groove 12A of the nut 12 lying in this groove, as described previously with reference to Figure 1.

The lower end portion of the body forms a projecting socket member 38, of which an internal socket 39 is adapted to fit closely over a projecting spigot on the body 1 which would be at the same location as the socket 1A illustrated in Figure 1. In fact the existing socket 1A may receive a spigot force fitted therein, the spigot being preferably provided with one or more external formations, such as ribs, which act to resist rotation of the spigot in the socket. The fitting of the socket member 38 over the projecting valve spigot takes place as the edge portions 34A of the web 34 are moved into engagement with the nut 12, as described above, thereby retaining the valve rod 4 and body 1 in a desired condition of adjustment, with the spring 10 correctly tensioned, as described in connection with Figures 1 to 3. The web 34 of the retention device of Figures 4 and 5 is offset in the manner described previously in order to provide an alternative valve setting. The body 31 is provided with laterally projecting arms 40 which fulfil the same role as the tongue 28 of the Figure 3 device during the correct positioning of the device and setting of the valve 1. They also serve for manual gripping of the device to enable it to be pulled away and detached from the valve body, when required.

## Claims

1. An assembly comprising a pair of co-acting components, a first (4) of which carries a rotary adjuster element (12), characterised by a retention device (20) in the form of a body (21, 31) having attachment means (22, 38) cooperating with attachment means (1A) on the second component (1) so as to attach the device firmly to the second component, and engagement means (23A, 34A), releasably engaged with the adjuster element so as to retain the latter relative to the first component whilst permitting rotary adjustment of the element.

2. An assembly according to Claim 1, characterised in that the attachment means of the body is a projection or socket (22, 38) adapted to interengage closely a complementary socket (1A) or spigot respectively of the second component (1).

3. An assembly according to Claim 2, characterised in that the body (21, 31) forms a slot (25, 35), a part (27, 36) of which is large enough for the rotatable adjuster element (12) to pass therethrough, and a part (25, 37) of which is of restricted width and of which the edge portions (23A, 34A) form the engagement means, being brought within a lateral groove (12A) of the adjuster element when the device is moved longitudinally to bring the projection and socket into interengagement following passage of the adjuster element through the slot.

4. An assembly according to Claim 3, characterised in that the slot (25, 37) extends in general alignment with the projection or socket (22, 38).

5. An assembly according to any one of the preceding claims, characterised in that the body (21) is generally U-shaped with the arms (21A, 21B) thereof interconnected by a web (23) which extends beyond the free ends of the arms and carries a tongue (28) for cooperation with a detector beam device.

6. An assembly according to any one of Claims 1 to 4, characterised in that the body (31) is generally U-shaped with the arms (32, 33) interconnected by a web (34) which extends beyond the free ends of the arms and carries a pair of oppositely extending arms (40) for cooperation with a detector beam device.

7. An assembly according to Claim 5 or Claim 6, characterised in that the web (23, 34) is offset widthwise of the body (2) so as to be asymmetrically disposed in this direction.

## Patentansprüche

1. Vorrichtung mit einem Paar von zusammenwirkenden Komponenten, von denen eine erste (4) ein drehbares Einstellelement (12) trägt, gekennzeichnet durch eine Haltevorrichtung (20) in der Form eines Hauptteiles (21, 31), das mit Befestigungseinrichtungen (22, 38), die mit Befestigungseinrichtungen (1A) an der zweiten Komponente (1) zusammenwirken, um die Vorrichtung fest an der zweiten Komponente anzubringen, und mit Eingriffseinrichtungen (23A, 34A) versehen ist, die lösbar mit dem Einstellelement in Eingriff stehen, um das Einstellelement relativ zur ersten Komponente zu halten, während eine drehbare Einstellung desselben ermöglicht wird.

2. Vorrichtung nach Anspruch 1, dadurch gekennzeichnet, daß die Befestigungseinrichtungen des Hauptteiles eine Vorsprung oder eine Fassung (22, 38) sind, die mit einer komplementär ausgebildeten Fassung (1A) oder einem entsprechenden Zapfen der Zweiten Komponente (1) in engen Eingriff treten können.

3. Vorrichtung nach Anspruch 2, dadurch gekennzeichnet, daß das Hauptteil (21, 31) einen Schlitz (25, 35) aufweist, von dem ein Teil (27, 36) groß genug ist, so daß sich das drehbare Einstellelement (12) hindurch erstrecken kann, von dem ein Teil (25, 37) eine begrenzte Breite besitzt und von dem die Randabschnitte (23A, 34A) die Eingriffseinrichtungen bilden, welche in eine seitliche Nut (12A) des Einstellelementes eingeführt werden, wenn die Vorrichtung in Längsrichtung bewegt wird, um den Vorsprung und die Fassung in Eingriff zu bringen, nachdem das Einstellelement den Schlitz passiert hat.

4. Vorrichtung nach Anspruch 3, dadurch gekennzeichnet, daß sich der Schlitz (25, 37) in allgemeiner Ausrichtung zum Vorsprung oder zur Fassung (22, 38) erstreckt.

5. Vorrichtung nach einem der vorangehenden Ansprüche, dadurch gekennzeichnet, daß das Hauptteil (21) allgemein U-förmig ausgebildet ist, wobei dessen Arme (21A, 21B) über einen Steg (23) miteinander verbunden sind, der sich über die freien Enden der Arme hinaus erstreckt und eine Zunge (28) zur Zusammenwirkung mit der Strahlvorrichtung eines Detektors trägt.

6. Vorrichtung nach einem der Ansprüche 1 bis 4, dadurch gekennzeichnet, daß das Hauptteil (31) allgemein U-förmig ausgebildet ist, wobei dessen Arme (32, 33) über einen Steg (34) miteinander verbunden sind, der sich über die freien Enden der Arme hinaus erstreckt und ein Paar von sich in entgegengesetzte Richtungen erstreckenden Armen (40) zur Zusammenwirkung mit der Strahlvorrichtung eines Detektors trägt.

7. Vorrichtung nach Anspruch 5 oder 6, dadurch gekennzeichnet, daß der Steg (23, 34) in Breitenrichtung des Hauptteils (2) versetzt ist, so daß er in dieser Richtung asymmetrisch angeordnet ist.

## Revendications

1. Assemblage comprenant une paire de composants coopérants, dont un premier (4) porte un élément d'ajustement rotatif (12), caractérisé par un dispositif de rétention (20) sous la forme d'un corps (21, 31) pourvu de moyens de fixation (22, 38) coopérant avec des moyens de fixation (1A) sur le deuxième composant (1) de manière à relier le dispositif solidement au deuxième composant, ainsi que des moyens de mise en prise (23A, 34A) accouplés de manière déblocable à l'élément d'ajustement de façon à retenir le dernier par rapport au premier composant tout en permettant l'ajustement rotatif de l'élément.

2. Assemblage suivant la revendication 1, caractérisé en ce que les moyens de fixation du corps sont constitués par un prolongement saillant ou une fiche (22, 38) conçus pour s'engager réciproquement et de manière serrée dans un manchon complémentaire (1A) ou dans un tourillon respectivement du deuxième composant (1).

3. Assemblage suivant la revendication 2, caractérisé en ce que le corps (21, 31) forme un trou oblong (25, 35), dont une partie (27, 36) est suffisamment large pour laisser passer à travers d'elle l'élément d'ajustement rotatif (12), dont une partie (25, 37) est de largeur réduite et dont les parties de lisière (23A, 34A) forment les moyens de mise en prise qui vont être positionnés dans une cannelure latérale (12A) de l'élément d'ajustement lorsque le dispositif est déplacé dans le sens longitudinal pour faire s'engager l'un dans l'autre le prolongement saillant et le manchon à la suite du passage de l'élément d'ajustement à travers le trou oblong.

4. Assemblage suivant la revendication 3, caractérisé en ce que le trou oblong (25, 37) s'étend dans un alignement général avec le prolongement saillant ou la fiche (22, 38).

5. Assemblage suivant n'importe laquelle des revendications précédentes, caractérisé en ce que le corps (21) présente généralement une forme en U dont les ailes (21A, 21B) sont reliées entre elles par une âme (23) qui se prolonge au-delà des extrémités libres des ailes et qui est munie d'une languette (28) pour coopérer avec un dispositif de détection à rayons.

6. Assemblage suivant n'importe laquelle des revendications 1 à 4, caractérisé en ce que le corps (31) présente généralement une forme en U dont les ailes (32, 33) sont reliées entre elles par une âme (34) qui se prolonge au delà des extrémités libres des ailes et qui est munie d'une paire de bras (40) s'étendant dans des directions opposées pour coopérer avec un dispositif de détection à rayons.

7. Assemblage suivant la revendication 5 ou la revendication 6, caractérisé en ce que l'âme (23, 34) est décentrée latéralement par rapport au corps (2) de manière à être disposée de façon asymétrique dans cette direction.
